# EUROPEAN PATENT APPLICATION

(11) **EP 4 819 351 A1**
(43) Date of publication of application: **07.10.2026**
(21) Application number: 24928059.5
(22) Date of filing: 18.09.2024
(51) Int. Cl.: H01M 50/471, H01M 50/474, H01M 50/133, H01M 10/04, H01M 10/0525, H01M 10/0587

(54) **BATTERY CELL, BATTERY, ELECTRICAL APPARATUS, AND ENERGY STORAGE APPARATUS**

(30) Priority: 06.03.2024 CN 202410255445
(71) Applicant: Contemporary Amperex Technology Co., Limited, Ningde, Fujian 352100 (CN)
(72) Inventor: HE, Runyong, Ningde, Fujian 352100 (CN)
(74) Representative: Ran, Handong
(86) International application number: PCT/CN2024/119409
(87) International publication number: WO 2025/185128

(57) **Abstract**

A battery cell, a battery, an electrical apparatus, and an energy storage apparatus. The battery cell comprises: an electrode assembly, which comprises at least two layers of stacked electrode sheets; a casing, an accommodating space being formed in the interior of the casing, the electrode assembly being located in the accommodating space, the casing comprising a first side wall and a second side wall, the first side wall being located on one side of the electrode assembly in the layer thickness direction, the plane on which the first side wall is located intersecting the plane on which the second side wall is located, and the first side wall being connected to the second side wall by means of a transition portion; and an elastic pad, which is located between the electrode assembly and the first side wall. The elastic pad is arranged between the electrode assembly and the first side wall, the electrode assembly can avoid the transition portion during expansion of the electrode assembly, and the elastic pad can also absorb a compressive force during the expansion of the electrode assembly. As a result, the risk of active material detachment caused by mutual compression and abrasion between the electrode assembly and the transition portion of the casing is more effectively reduced, thereby mitigating the phenomenon of lithium plating and prolonging the service life of a battery.

## Description

### CROSS-REFERENCE TO RELATED APPLICATIONS

This disclosure claims priority to Chinese Patent Application No. 202410255445.8, filed on March 6, 2024 and entitled "BATTERY CELL, BATTERY, ELECTRIC APPARATUS, AND ENERGY STORAGE APPARATUS", which is incorporated herein by reference in its entirety.

### TECHNICAL FIELD

This disclosure relates to the field of battery technologies, and in particular, to a battery cell, a battery, an electric apparatus, and an energy storage apparatus.

### BACKGROUND

The application of new energy batteries in life and industry become increasingly widespread. For example, new energy vehicles disposed with batteries have been widely used. In addition, batteries are increasingly used in fields such as energy storage.

In new energy vehicles disposed with batteries, the batteries may be used to provide all or part of the power. In the field of energy storage, batteries may be installed in an energy storage box or directly installed on a user side. In these application scenarios, how service life of batteries can be prolonged is a current subject of research.

### SUMMARY

To solve the above technical problems, this disclosure provides a battery cell, a battery, an electric apparatus, and an energy storage apparatus capable of prolonging the service life.

This disclosure is implemented using the following technical solutions.

A first aspect of this disclosure provides a battery cell, including: an electrode assembly, including at least two layers of electrode plates, where the at least two layers of electrode plates are stacked; a housing, with an accommodating space formed inside, where the electrode assembly is located in the accommodating space, the housing includes a first side wall and a second side wall, the first side wall is located on a side of the electrode assembly in a layer thickness direction, a plane on which the first side wall is located intersects with a plane on which the second side wall is located, and the first side wall is connected to the second side wall through a transition portion; and an elastic pad, located between the electrode assembly and the first side wall.

The elastic pad located between the electrode assembly and the first side wall can not only increase a distance between the electrode assembly and the housing and provide space required for swelling of the electrode assembly, thus avoiding the transition portion, but also absorb the squeezing force during swelling of the electrode assembly, thereby reducing the risk of falling-off of an active substance due to wear caused by mutual squeezing between the electrode assembly and the transition portion of the housing, relieving lithium precipitation, and prolonging the service life of a battery.

In some embodiments, the transition portion has a transition round corner, and a thickness of the elastic pad is greater than a radius of the transition round corner.

The thickness of the elastic pad being greater than the radius of the transition round corner can provide more avoidance space for the swelling of the electrode assembly, thereby more effectively reducing the risk of falling-off of the active substance due to wear caused by mutual squeezing between the electrode assembly and the transition portion of the housing, relieving lithium precipitation, and prolonging the service life of the battery.

In some embodiments, the housing includes two first side walls opposite each other in the layer thickness direction, where the two first side walls are respectively located on opposite sides of the electrode assembly in the layer thickness direction; and the elastic pad is provided between each first side wall and the electrode assembly.

Thus, two transition portions can be avoided at the same time, and the swelling of the electrode assembly in the layer thickness direction can be absorbed by respective elastic pads, thereby more effectively reducing the risk of falling-off of the active substance due to wear caused by mutual squeezing between the electrode assembly and the transition portion of the housing, relieving lithium precipitation, and prolonging the service life of the battery. In some embodiments, the housing is a flexible housing, and the elastic pad completely covers a surface of the electrode assembly facing the first side wall.

In some embodiments, the housing is a flexible housing, and the elastic pad completely covers a surface of the electrode assembly facing the first side wall.

Since the housing is a flexible housing and the flexible housing wraps the electrode assembly inside, two adjacent side walls of the flexible housing may be connected through the transition portion. With the elastic pad completely covering the surface of the electrode assembly facing the first side wall, each transition portion can be effectively avoided, reducing the risk of wear caused by mutual squeezing between the electrode assembly and the transition portion of the housing, relieving lithium precipitation, and prolonging the service life of the battery.

In some embodiments, the housing is a rigid housing, and the elastic pad partially covers or completely covers a surface of the electrode assembly facing the first side wall.

Since the housing is a rigid housing, the elastic pad that is located between the first side wall and the electrode assembly and partially covers the surface of the electrode assembly facing the first side wall achieves avoidance of the transition portion while saving materials and reducing costs. The elastic pad completely covering the surface of the electrode assembly facing the first side wall can absorb the squeezing force during swelling of the electrode assembly more uniformly.

In some embodiments, the plane on which the second side wall is located is perpendicular to the layer thickness direction, the electrode assembly is configured as a wound structure, the electrode assembly includes a flat portion and a bent portion connected with each other, and the elastic pad is provided between the flat portion and the first side wall.

During swelling of the electrode assembly, the flat portion is more likely to interfere with and squeeze the transition portion compared with the bent portion. Therefore, the elastic pad provided between the flat portion and the first side wall can effectively reduce the risk of wear caused by mutual squeezing between the electrode assembly and the transition portion of the housing, relieve lithium precipitation, prolong the service life of the battery, and also reduce the number of elastic pads used and reduce costs.

In some embodiments, the electrode assembly is configured as a laminated structure.

In some embodiments, the elastic pad is configured as compressible in the layer thickness direction, and the elastic pad has a thickness of T when uncompressed and a thickness of T1 when compressed by a surface stress of 2 MPa, where T is greater than the radius of the transition round corner, and (T - T1)/T ≥ 30%.

Appropriate compressibility rate of the elastic pad leads to appropriate compressibility performance, which allows the elastic pad to absorb more squeezing force during swelling of the electrode assembly, thereby more effectively reducing the risk of falling-off of the active substance due to wear caused by mutual squeezing between the electrode assembly and the transition portion of the housing, relieving lithium precipitation, and prolonging the service life of the battery.

In some embodiments, the electrode assembly includes tabs connected to the electrode plates, where an end of the tab extends outside the housing, thus constituting a pouch battery cell.

In some embodiments, an end of the housing is provided with an opening, and the battery cell further includes: an end cover, provided at the opening, where the end cover is provided with electrode terminals; and the electrode assembly includes tabs connected to the electrode plates, where the tabs are connected to the electrode terminals.

A second aspect of this disclosure provides a battery, including: a box and the battery cell according to any one of the foregoing embodiments, where the battery cell is accommodated in the box.

A third aspect of this disclosure provides an electric apparatus, where the electric apparatus includes the battery cell or battery according to any of the above embodiments and configured to supply electrical energy.

A fourth aspect of this disclosure provides an energy storage apparatus, including the battery cell or battery according to any of the above embodiments, where the battery is capable of storing electrical energy and supplying electrical energy.

In the technical solutions of the embodiments of this disclosure, since the elastic pad is provided between the electrode assembly and the first side wall, during swelling of the electrode assembly, the transition portion can be avoided, and the elastic pad can also absorb the squeezing force during swelling of the electrode assembly, prolonging the service life of the battery.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the objectives of the optional embodiments and should not be interpreted as limiting this disclosure. Moreover, throughout the accompanying drawings, the same reference signs represent the same parts. In the drawings:
FIG. 1 is a schematic structural diagram of a vehicle according to some embodiments of this disclosure.
FIG. 2 is a schematic exploded view of a battery according to some embodiments of this disclosure.
FIG. 3 is a schematic exploded view of a battery cell according to some embodiments of this disclosure.
FIG. 4 is a schematic cross-sectional view of a battery cell according to some embodiments of this disclosure, where the elastic pad is in an uncompressed state.
FIG. 5 is a schematic cross-sectional view of a battery cell according to some embodiments of this disclosure, where the elastic pad is in a compressed state.
FIG. 6 is a schematic structural diagram of a battery cell according to some other embodiments of this disclosure.
FIG. 7 is a schematic cross-sectional view of A-A of the battery cell in FIG. 6 according to some embodiments of this disclosure.
FIG. 8 is an enlarged partial schematic diagram of B in FIG. 7 according to some embodiments of this disclosure.
FIG. 9 is a schematic exploded view of a battery cell with a housing removed according to some embodiments of this disclosure.
FIG. 10 is a cross-sectional view of an electrode assembly according to some embodiments of this disclosure.

### Description of reference signs:

1000: vehicle; 100: battery; 200: controller; 300: motor;
1: base plate; 2: cover; 3: vertical plate;
10: battery cell;
11: electrode assembly; 111: flat portion; 112: bent portion; 113: electrode plate; 113a: positive electrode plate; 113b: negative electrode plate; 114: separator; 115: tab; 115a: positive electrode tab; 115b: negative electrode tab;
12: housing; 121: first side wall; 122: second side wall; 123: third side wall; 12a: transition portion; 12b: accommodating space;
13: end cover;
14: electrode terminal;
15: pressure relief valve;
16: elastic pad;
C: layer thickness direction; T and T1: thickness; and R: radius.

### DESCRIPTION OF EMBODIMENTS

The following describes in detail the embodiments of technical solutions of this disclosure with reference to the accompanying drawings. The following embodiments are merely used to describe technical solutions of this disclosure more explicitly, and therefore they are merely used as examples and do not constitute any limitations on the protection scope of this disclosure.

Unless otherwise defined, all technical and scientific terms used herein shall have the same meanings as commonly understood by those skilled in the art to which this disclosure relates. The terms used herein are intended to merely describe the specific embodiments rather than to limit this disclosure. The terms "comprise", "include", "have", and any other variations thereof in the specification, claims and brief description of drawings of this disclosure are intended to cover non-exclusive inclusions.

In the description of the embodiments of this disclosure, the terms "first", "second", and the like are merely intended to distinguish between different objects, and shall not be understood as any indication or implication of relative importance or any implicit indication of the number, sequence or primary-secondary relationship of the technical features indicated. In the description of the embodiments of this disclosure, "a plurality of" means at least two unless otherwise specifically stated.

Reference to "embodiment" in the specification means that specific features, structures, or characteristics described with reference to the embodiment may be included in at least one embodiment of this disclosure. The word "embodiment" appearing in various places in the specification does not necessarily refer to the same embodiment or an independent or alternative embodiment that is exclusive of other embodiments. Persons skilled in the art explicitly and implicitly understand that the embodiments described herein may combine with another embodiment.

In the description of the embodiments of this disclosure, the term "and/or" is only an associative relationship for describing associated objects, indicating that three relationships may be present. For example, A and/or B may indicate the following three cases: presence of A, presence of both A and B, and presence of B. In addition, the character "/" in this specification generally indicates an "or" relationship between contextually associated objects.

In the description of the embodiments of this disclosure, the orientation or positional relationship indicated by the technical terms such as "length", "width", "thickness", "upper", "lower", "front", "rear", "left", "right", "vertical", "horizontal", "top", "bottom", "inside", "outside", "circumferential", and the like are based on the orientations or positional relationships as shown in the accompanying drawings. These terms are merely for ease and brevity of description of the embodiments of this disclosure rather than indicating or implying that the means or components mentioned must have specific orientations or must be constructed or manipulated according to specific orientations, and therefore shall not be construed as any limitations on embodiments of this disclosure.

In the description of the embodiments of this disclosure, unless otherwise specified and defined explicitly, the terms "mounting", "connection", "join", and "attachment" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this disclosure as appropriate to specific situations.

In the description of the embodiments of this disclosure, unless otherwise specified and defined explicitly, the term "contact" should be understood in its general sense. It may refer to a direct contact or contact via an intermediate medium layer, and may refer to a contact between two parts basically with no mutual interaction force, or a contact between two parts with mutual interaction forces.

The following describes this disclosure in detail.

At present, the application of new energy batteries in life and industry has become increasingly widespread. New energy batteries have been not only used in energy storage power supply systems such as hydroelectric, thermal, wind, and solar power plants, but also widely used in many other fields including electric transportation tools such as electric bicycles, electric motorcycles, and electric vehicles, and aerospace. With the continuous expansion of application fields of traction batteries, market demands for traction batteries are also increasing.

During cycling of batteries, the volumes of the batteries change, and larger volume changes of the batteries lead to greater squeezing forces between housings of the batteries or between battery housings and a box. Adding compressible soft pads such as insulation pads or buffer pads between the housings of the batteries or between the battery housings and the box can provide space required for the batteries due to volume changes, which can effectively alleviate the mutual squeezing between the batteries, reduce the risk of thermal runaway caused by squeezing wear of the batteries, and thus prolong the service life of the batteries.

Research has revealed that the volume change of a battery during cycling is mainly caused by swelling of an electrode assembly in a thickness direction thereof inside a housing. During swelling of the electrode assembly, due to mutual squeezing with the housing, the electrode assembly is prone to wear, and an active substance layer at a worn part is prone to falling-off, which may lead to lithium precipitation, and the lithium precipitation has an adverse effect on the service life of the battery. It is found through further research that a transition portion (which may be called a corner) connecting two side walls of the housing is usually a round corner transition or chamfer transition. Due to relatively cramped space at the transition portion, a distance between the electrode assembly and the transition portion is small. Therefore, during swelling, the electrode assembly is more likely prone to mutual squeezing with the transition portion, which leads to wear, thereby causing falling-off of an active substance, resulting in lithium precipitation, and ultimately having an adverse effect on the service life of the battery. In pouch batteries where a housing is made of a flexible material, the housing may be formed by arranging two flexible sheets close to each other and combining them, which also leads to a risk of interference between a bent part of the flexible sheet and an internal electrode assembly (especially corners of the electrode assembly).

In view of this, this disclosure provides an elastic pad between a housing and an electrode assembly, and the elastic pad increases a distance between the electrode assembly and side walls of the housing, avoids a transition portion, provides space required for swelling of the electrode assembly, and absorbs the swelling of the electrode assembly through the elastic pad, thereby reducing the risk of falling-off of an active substance due to wear caused by mutual squeezing between the electrode assembly and the housing, relieving lithium precipitation, and prolonging the service life of a battery.

Based on such design concepts, this disclosure provides a battery cell, including: an electrode assembly, including at least two layers of electrode plates, where the at least two layers of electrode plates are stacked; a housing, with an accommodating space formed inside, where the electrode assembly is located in the accommodating space, the housing includes a first side wall and a second side wall, the first side wall is located on a side of the electrode assembly in a layer thickness direction, a plane on which the first side wall is located intersects with a plane on which the second side wall is located, and the first side wall is connected to the second side wall through a transition portion; and an elastic pad, located between the electrode assembly and the first side wall.

The elastic pad located between the electrode assembly and the first side wall can not only increase a distance between the electrode assembly and the housing and avoid the transition portion to provide space required for swelling of the electrode assembly, but also absorb the swelling of the electrode assembly, thereby reducing the risk of falling-off of an active substance due to wear caused by mutual squeezing between the electrode assembly and the transition portion of the housing, relieving lithium precipitation, and prolonging the service life of a battery.

This disclosure further provides a battery, including one or more battery cells. The battery can reduce the risk of falling-off of an active substance due to wear caused by mutual squeezing between an electrode assembly and a transition portion of a housing, relieving lithium precipitation, and prolonging the service life of the battery.

In the embodiments of this disclosure, the battery cell may be a secondary battery. A secondary battery refers to a battery cell that can continue to be used after discharged because its active materials can be reactivated through recharging.

The battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like. This is not limited in the embodiments of this disclosure.

The battery cell generally includes an electrode assembly. The electrode assembly includes a positive electrode, a negative electrode, and a separator. During a charge and discharge process of the battery cell, active ions (such as lithium ions) are intercalated and deintercalated between the positive electrode and the negative electrode. The separator is sandwiched between the positive electrode and the negative electrode to prevent short circuits between the positive and negative electrodes and allow active ions to pass through.

In some embodiments, the positive electrode may be a positive electrode plate, and the positive electrode plate may include a positive electrode current collector and a positive electrode active material provided on at least one surface of the positive electrode current collector.

In an example, the positive electrode current collector has two opposite surfaces in its thickness direction, and the positive electrode active material is disposed on either or both of the two opposite surfaces of the positive electrode current collector.

In an example, the positive electrode current collector may be a metal foil or a composite current collector. For example, for the metal foil, aluminum or stainless steel treated with silver surface, stainless steel, copper, aluminum, nickel, carbon paste electrode, carbon, nickel, or titanium may be used. The composite current collector may be formed by forming a metal material (aluminum, aluminum alloy, nickel, nickel alloy, titanium, titanium alloy, silver, silver alloy, or the like) on a polymer material matrix (matrices such as polypropylene, polyethylene terephthalate, polybutylene terephthalate, polystyrene, or polyethylene).

In an example, the positive electrode active material may include at least one of the following materials: lithium-containing phosphate, lithium transition metal oxide, and respective modified compound thereof. However, this disclosure is not limited to these materials, and may alternatively use other conventional materials that can be used as positive electrode active materials for batteries. One type of these positive electrode active materials may be used alone, or two or more of them may be used in combination. Examples of the lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

In some embodiments, the positive electrode may be a foam metal. The foam metal may be foam nickel, foam copper, foam aluminum, foam alloy, foam carbon, or the like. When a foam metal is used as the positive electrode, a surface of the foam metal may be provided with no positive electrode active material, and certainly, may alternatively be provided with a positive electrode active material. In an example, a lithium source material, potassium metal, or sodium metal may also be filled and/or deposited in the foam metal, and the lithium source material is a lithium metal and/or lithium-rich material.

In some embodiments, the negative electrode may be a negative electrode plate, and the negative electrode plate may include a negative electrode current collector.

In an example, the negative electrode current collector may be a metal foil, a foam metal, or a composite current collector. For example, for the metal foil, aluminum or stainless steel treated with silver surface, stainless steel, copper, aluminum, nickel, carbon paste electrode, carbon, nickel, titanium, or the like may be used. The composite current collector may include a polymer material matrix and a metal layer. The foam metal may be foam nickel, foam copper, foam aluminum, foam alloy, foam carbon, or the like. The composite current collector may be formed by forming a metal material (copper, copper alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, or polyethylene). In some embodiments, the material of the positive electrode current collector may be aluminum, and the material of the negative electrode current collector may be copper.

In some embodiments, the electrode assembly further includes a separator, and the separator is sandwiched between the positive electrode and the negative electrode.

In some embodiments, the separator is a separation film. The separation film is not limited to a particular type in this disclosure, and may be any well-known porous separation film with good chemical stability and mechanical stability.

In an example, a main material of the separation film may be selected from at least one of glass fiber, non-woven fabric, polyethylene, polypropylene, polyvinylidene fluoride, and ceramic.

In some embodiments, the separator is a solid electrolyte. The solid electrolyte is sandwiched between the positive electrode and the negative electrode to transmit ions and isolate the positive and negative electrodes.

In some embodiments, the battery cell further includes an electrolyte, and the electrolyte conducts ions between the positive and negative electrodes. The electrolyte is not specifically limited to any particular type in this disclosure, and may be selected depending on needs.

In some embodiments, the electrode assembly is a wound structure. The positive electrode plate and negative electrode plate are wound into a wound structure.

In some embodiments, the electrode assembly is a laminated structure.

In an example, a plurality of positive electrode plates and a plurality of negative electrode plates may be provided separately, and the plurality of positive electrode plates and the plurality of negative electrode plates are alternately stacked.

In an example, a plurality of positive electrode plates may be provided, the negative electrode plate is folded to form a plurality of stacked folding sections, and each positive electrode plate is sandwiched between adjacent folding sections.

In an example, both the positive electrode plate and the negative electrode plate are folded to form a plurality of stacked folding sections.

In an example, a plurality of separators may be provided and respectively sandwiched between any adjacent positive electrode plates or negative electrode plates.

In an example, the separator may be continuously provided and sandwiched between any adjacent positive electrode plates or negative electrode plates by folding or winding.

In some embodiments, a shape of the electrode assembly may be cylindrical, flat, multi-prismatic, or the like.

In some embodiments, the electrode assembly is provided with tabs, and the tabs may lead current out from the electrode assembly. The tabs include a positive tab and a negative tab.

In some embodiments, the battery cell may include an enclosure. The enclosure is configured to package components like the electrode assembly and electrolyte. The enclosure may be a steel, aluminum, plastic (such as polypropylene), or composite metal (such as copper-aluminum composite) shell, an aluminum-plastic film, or the like.

In an example, the battery cell may be a cylindrical battery cell, prismatic battery cell, pouch battery cell, or battery cell of another shape. Prismatic battery cells include square battery cells, blade battery cells, and multi-prismatic batteries, and multi-prismatic batteries are for example hexagonal batteries. This is not particularly limited in this disclosure.

In some embodiments, the enclosure includes an end cover and a housing. The housing is provided with an opening, and the end cover closes the opening to form an enclosed space for accommodating substances such as the electrode assembly and the electrolyte. The housing may be provided with one or more openings. The end cover may also be provided in one or more.

In some embodiments, the enclosure is provided with at least one electrode terminal, and the electrode terminal is electrically connected to the tab. The electrode terminal may be directly connected to the tab or indirectly connected to the tab through an adapter component. The electrode terminal may be provided on the end cover or on the housing.

In some embodiments, the enclosure is provided with a pressure relief mechanism. The pressure relief mechanism is configured to release an internal pressure of the battery cell.

The battery mentioned in the embodiments of this disclosure may be a single physical module that includes one or more battery cells for providing a higher voltage and capacity. When there are a plurality of battery cells, the plurality of battery cells are connected in series, parallel, or series-parallel through a busbar.

In some embodiments, the battery may be a battery module. When there are a plurality of battery cells, the plurality of battery cells are arranged and fixed to form one battery module.

In some embodiments, the battery may be a battery pack. The battery pack includes a box and battery cells, with the battery cells or battery modules accommodated within the box.

In some embodiments, the box may be a part of a chassis structure of a vehicle. For example, a part of the box may be at least a part of the chassis structure of the vehicle. Alternatively, a part of the box may be at least a part of the vehicle's cross members and roof rails.

In some embodiments, the battery may be an energy storage apparatus. Energy storage apparatuses include energy storage containers, energy storage cabinets, and the like.

The battery provided in the embodiments of this disclosure may be used without limitation in electric apparatuses such as energy storage apparatuses, vehicles, ships, or aircrafts. The battery provided in the embodiments of this disclosure can reduce the risk of falling-off of the active substance due to wear caused by mutual squeezing between the electrode assembly and the transition portion of the housing and relieve lithium precipitation, thereby prolonging the service life of electric apparatuses such as energy storage apparatuses, vehicles, ships, or aircrafts.

The embodiments of this disclosure provide an electric apparatus including the foregoing battery or battery pack for providing electrical energy. The electric apparatus may be but is not limited to a mobile phone, a tablet, a laptop computer, an electric toy, an electric tool, an electric bicycle, an electric car, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle 1000 is used as an example for description of the following embodiments. The following provides description with reference to the accompanying drawings.

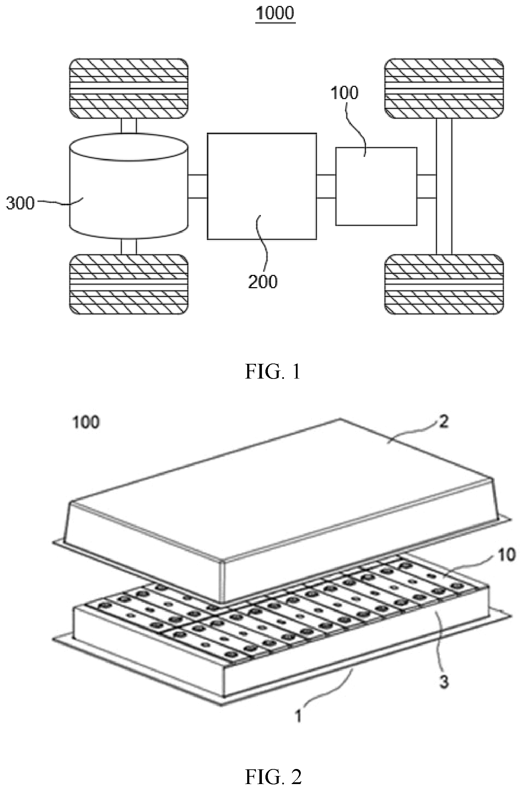

FIG. 1 is a schematic structural diagram of a vehicle 1000 according to some embodiments of this disclosure. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. As shown in FIG. 1, the vehicle 1000 is provided with a battery 100 inside, where the battery 100 may be disposed at the bottom, front or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this disclosure, the battery 100 may be used as not only the operational power source for the vehicle 1000 but also a driving power source for the vehicle 1000, replacing or partially replacing fossil fuel or natural gas to provide driving traction for the vehicle 1000.

FIG. 2 is a schematic three-dimensional exploded view of a battery 100 according to an embodiment of this disclosure. As shown in FIG. 2, the battery 100 includes a base plate 1, a cover 2, a vertical plate 3, and at least one battery cell 10. The cover 2 covers above the base plate 1, thereby forming an accommodating space for the battery cell 10 between the base plate 1 and the cover 2.

In the battery 100, the battery cell 10 may be provided in plurality, and the plurality of battery cells 10 may be connected in series, parallel, or series-parallel, where being connected in series-parallel means a combination of series and parallel connections of the plurality of battery cells 10. The plurality of battery cells 10 may be directly connected in series, parallel, or series-parallel, and then an entirety of the plurality of battery cells 10 is accommodated in the accommodating space formed by the base plate 1 and the cover 2. Certainly, the battery 100 may be formed by a plurality of battery cells 10 being connected in series, parallel, or series-parallel first to form a battery module and then a plurality of battery modules being connected in series, parallel, or series-parallel to form an entirety which is accommodated in the accommodating space formed by the base plate 1 and the cover 2. The battery 100 may further include other structures. For example, the battery 100 may further include a busbar configured to implement electrical connection between the plurality of battery cells 10.

In the embodiments of this disclosure, the battery cell may be a secondary battery. A secondary battery refers to a battery cell that can continue to be used after discharged because its active materials can be reactivated through recharging.

The battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like. This is not limited in the embodiments of this disclosure.

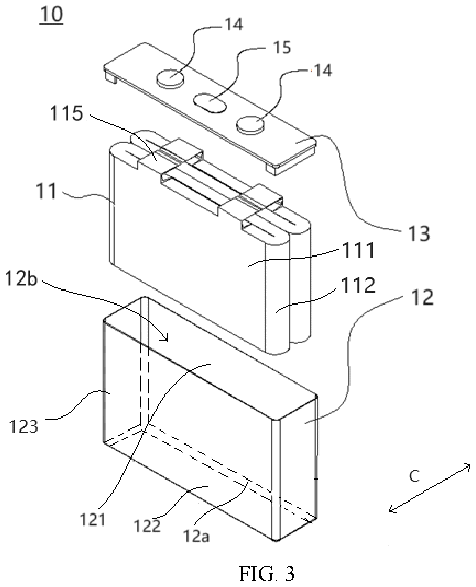

The following describes some embodiments of this disclosure in detail with reference to FIG. 3 to FIG. 10.

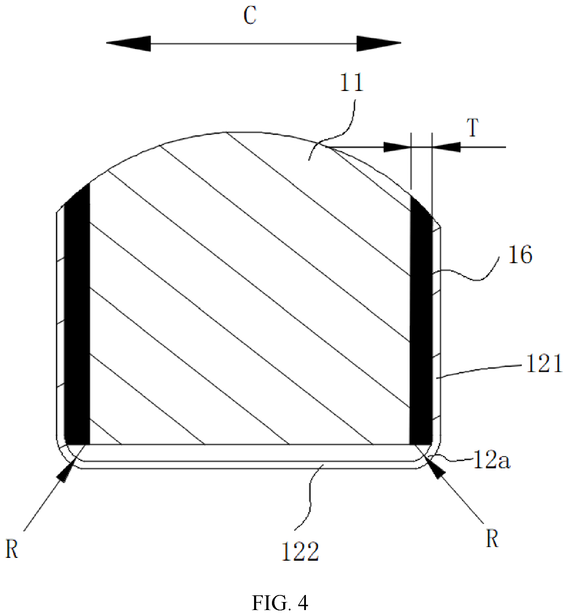

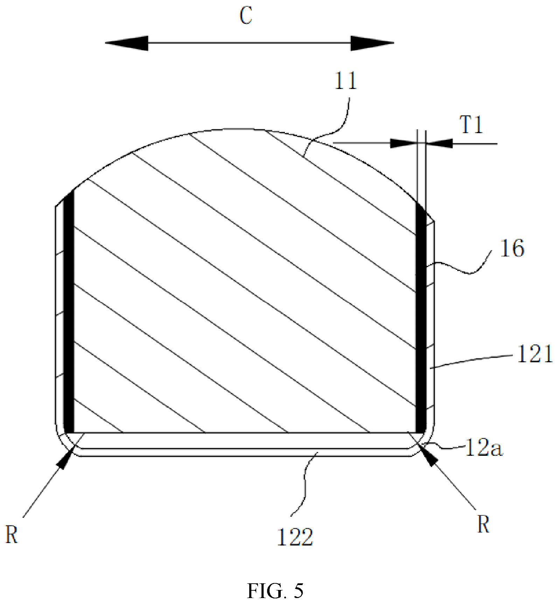

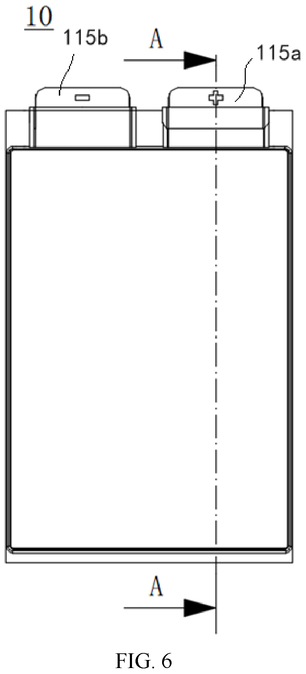

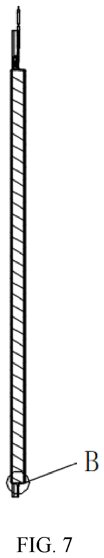

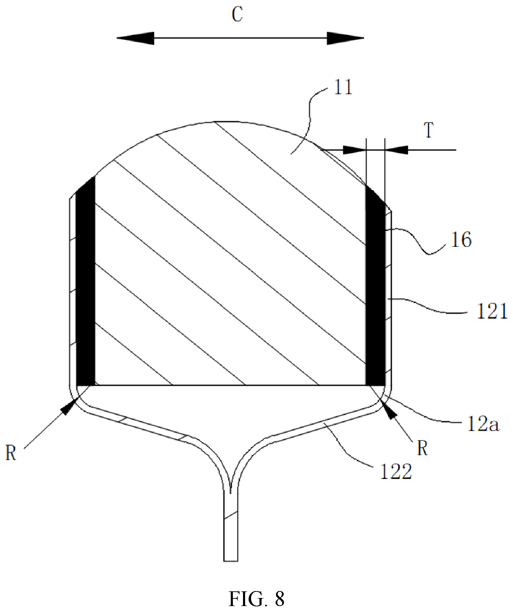

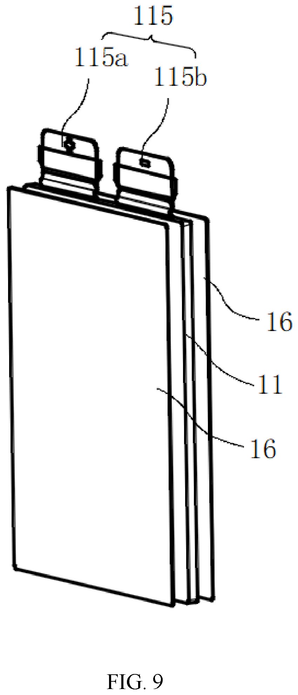

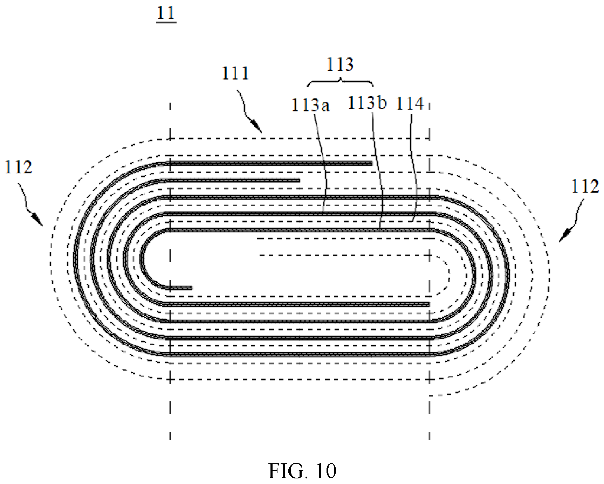

FIG. 3 is a schematic exploded view of a battery cell according to some embodiments of this disclosure. FIG. 4 is a schematic cross-sectional view of a battery cell according to some embodiments of this disclosure, where the elastic pad is in an uncompressed state. FIG. 5 is a schematic cross-sectional view of a battery cell according to some embodiments of this disclosure, where the elastic pad is in a compressed state. FIG. 6 is a schematic structural diagram of a battery cell according to some other embodiments of this disclosure. FIG. 7 is a schematic cross-sectional view of A-A of the battery cell in FIG. 6 according to some embodiments of this disclosure. FIG. 8 is an enlarged partial schematic diagram of B in FIG. 7 according to some embodiments of this disclosure. FIG. 9 is a schematic exploded view of a battery cell with a housing removed according to some embodiments of this disclosure. FIG. 10 is a cross-sectional view of an electrode assembly according to some embodiments of this disclosure.

An embodiment of this disclosure provides a battery cell 10, including an electrode assembly 11, a housing 12, and an elastic pad 16. The electrode assembly 11 includes at least two layers of electrode plates 113, where the at least two layers of electrode plates 113 are stacked. An accommodating space 12b is formed inside the housing 12, and the electrode assembly 11 is located in the accommodating space 12b. The housing 12 includes a first side wall 121 and a second side wall 122, where the first side wall 121 is located on a side of the electrode assembly 11 in a layer thickness direction C, a plane on which the first side wall 121 is located intersects with a plane on which the second side wall 122 is located, and the first side wall 121 is connected to the second side wall 122 through a transition portion 12a. The elastic pad 16 is located between the electrode assembly 11 and the first side wall 121.

Referring to FIG. 3 and FIG. 10, the electrode assembly 11 may include a plurality of layers of electrode plates 113, and the plurality of layers of electrode plates 113 include a positive electrode plate 113a and a negative electrode plate 113b.

The electrode assembly 11 further includes tabs 115 connected to the electrode plates 113. The tabs 115 include a positive electrode tab 115a and a negative electrode tab 115b.

The at least two layers of electrode plates (positive electrode plate 113a and negative electrode plate 113b) of the electrode assembly 11 are stacked to form a stacked structure with a certain thickness. The stacked structure may be a wound stacked structure or a laminated stacked structure. The wound stacked structure includes a flat portion 111 and a bent portion 112.

The housing 12 includes an accommodating space for accommodating the electrode assembly 11. The housing 12 may have various structure forms. In some embodiments, the housing 12 may be a rigid housing, such as a steel, aluminum, plastic (such as polypropylene), or composite metal (such as copper-aluminum composite) shell. In some other embodiments, the housing 12 may be a flexible housing, such as an aluminum-plastic shell (aluminum-plastic film). No matter whether the housing 12 is a rigid housing or a flexible housing, the electrode assembly 11 inside the housing may be a wound stacked structure or a laminated stacked structure.

When the housing 12 is a rigid housing, the housing 12 may be a hollow structure with an opening on one side, and the end cover 13 covers the opening of the housing 12 to form hermetical connection so as to form a closed accommodating space for accommodating the electrode assembly 11 and an electrolyte. Certainly, the housing 12 may alternatively be a hollow structure with openings on both sides, and an end cover 13 covers each opening to separately form hermetical connection so as to form a closed accommodating space for accommodating the electrode assembly 11 and an electrolyte.

When the housing 12 is a flexible housing, the electrode assembly 11 may be packaged by an aluminum-plastic film in an accommodating space, thereby constituting a pouch battery.

The housing 12 may be of various shapes, which may be determined according to a specific shape and size of the electrode assembly 11. For example, the shape may be cylinder or prism, and the prism may include cube, cuboid, multi-prism, or the like.

The housing 12 may include a plurality of walls, and the plurality of walls include the first side wall 121 and the second side wall 122. The first side wall 121 is located on the side of the electrode assembly 11 in the layer thickness direction C. For example, the first side wall 121 faces a side surface of the electrode assembly 11 in the layer thickness direction.

The plane on which the first side wall 121 is located intersects with the plane on which the second side wall 122 is located, which may be understood as that an included angle is present between the first side wall 121 and the second side wall 122. For example, the plane on which the first side wall 121 is located and the plane on which the second side wall 122 is located are perpendicular to each other.

The first side wall 121 is connected to the second side wall 122 through the transition portion 12a, which may be understood as that the first side wall 121 and the second side wall 122 are adjacent and connected with each other through the transition portion 12a. The transition portion 12a may be a round corner or a chamfer.

Due to a small distance between the electrode assembly 11 located inside the housing 12 and the transition portion 12a, during swelling of the electrode assembly 11, an edge of the electrode assembly 11 adjacent to the transition portion 12a is subjected to interference and squeezing with the transition portion 12a, which leads to wear, thereby causing falling-off of an active substance layer on the electrode assembly 11, easily resulting in lithium precipitation, and ultimately having an adverse effect on the service life of the battery.

The elastic pad 16 is located between the electrode assembly 11 and the first side wall 121, so that the elastic pad 16 can increase the distance between the electrode assembly and the housing, providing space required for swelling of the electrode assembly 11, thereby avoiding the transition portion 12a. The elastic pad can also absorb the swelling of the electrode assembly, thereby reducing the risk of wear caused by mutual squeezing between the electrode assembly and the transition portion of the housing, relieving lithium precipitation, and prolonging the service life of the battery.

In some embodiments, a material of the elastic pad 16 may be a material with chemical corrosion resistance, insulation, and elasticity, for example, rubber.

In some embodiments, referring to FIG. 4 and FIG. 8, the transition portion 12a has a transition round corner, and a thickness T of the elastic pad 16 is greater than a radius R of the transition round corner.

The elastic pad 16 has some compressibility when squeezed, and the thickness of the elastic pad 16 may be understood as the thickness T when the elastic pad 16 is not compressed.

The thickness T of the elastic pad 16 being greater than the radius of the transition round corner allows the elastic pad 16 to provide more avoidance space for the swelling of the electrode assembly to avoid the transition portion, enabling the elastic pad to absorb more squeezing force during swelling of the electrode assembly, thereby more effectively reducing the risk of falling-off of the active substance due to wear caused by mutual squeezing between the electrode assembly and the transition portion of the housing, relieving lithium precipitation, and prolonging the service life of the battery.

In some embodiments, referring to FIG. 4 and FIG. 5, the elastic pad 16 is configured as compressible in the layer thickness direction C, and the elastic pad 16 has a thickness of T when uncompressed (as shown in FIG. 4) and a of T1 when compressed by a surface stress of 2 MPa (as shown in FIG. 5), where T is greater than the radius R of the transition round corner, and (T - T1)/T ≥ 30%.

Satisfying (T - T1)/T ≥ 30% allows for appropriate compressibility rate of the elastic pad 16, enabling the elastic pad 16 to absorb more squeezing force during swelling of the electrode assembly 11, thereby more effectively reducing the risk of falling-off of the active substance due to wear caused by mutual squeezing between the electrode assembly and the transition portion of the housing, relieving lithium precipitation, and prolonging the service life of the battery.

In some embodiments, the housing 12 includes two first side walls 121 opposite each other in the layer thickness direction C, where the two first side walls 121 are respectively located on opposite sides of the electrode assembly 11 in the layer thickness direction C, and the elastic pad 16 is provided between each first side wall 121 and the electrode assembly 11.

It can be understood that each first side wall 121 is transitionally connected to each second side wall 122 through the transition portion 12a separately. The two first side walls 121 respectively face two side surfaces of the electrode assembly 11 in the layer thickness direction.

Since the electrode assembly 11 mainly swells along its layer thickness direction C, elastic pads 16 are respectively provided between the electrode assembly 11 and the two first side walls 121 on opposite sides of the layer thickness direction of the electrode assembly 11, which can avoid two transition portions 12a at the same time, and absorb the swelling of the electrode assembly 11 in the layer thickness direction through respective elastic pads 16, thereby more effectively reducing the risk of falling-off of the active substance due to wear caused by mutual squeezing between the electrode assembly and the transition portion of the housing, relieving lithium precipitation, and prolonging the service life of the battery.

In an example, referring to FIG. 3 and FIG. 4, the housing 12 is a rectangular rigid housing, the housing 12 includes two first side walls 121 opposite each other in the layer thickness direction C of the electrode assembly 11, two third side walls 123 adjacent and perpendicular to respective first side walls 121, a second side wall 122 (also called a bottom wall) adjacent and connected to the two first side walls 121, and the two first side walls 121, one second side wall 122, and the two third side walls 123 jointly form an accommodating space 12b with an opening. Among the side walls of the housing 12, at least two first side walls 121 are separately connected to the second side wall 122 through transition portions 12a. For example, each first side wall 121 is separately connected to the second side wall 122 through the transition portion 12a, and each first side wall 121 is separately connected to the third side wall 123 through the transition portion 12a.

In some embodiments, the first side wall 121 may be a wall with the largest area among the side walls of the housing 12.

The electrode assembly 11 may be a wound stacked structure formed by one or more wound body parts, and the electrode assembly 11 is accommodated in the accommodating space 12b. The electrode assembly 11 includes two side surfaces located on opposite sides in the layer thickness direction, where one side surface faces one first side wall 121, and the other side surface faces the other first side wall 121. In some embodiments, the side surface of the electrode assembly 11 facing the first side wall 121 is a side surface with the largest area among the side surfaces of the electrode assembly 11.

The elastic pads 16 are separately provided between the first side walls 121 and the side surfaces of the electrode assembly 11, to separately avoid the two transition portions 12a, and respective elastic pads 16 absorb the squeezing force during swelling of the electrode assembly 11 in the layer thickness direction.

In some embodiments, the plane on which the second side wall 122 is located is perpendicular to the layer thickness direction C, the electrode assembly 11 is configured as a wound structure, the electrode assembly 11 includes a connected flat portion 111 and a bent portion 112, and an elastic pad 16 is provided between the flat portion 111 and the first side wall.

During swelling of the electrode assembly 11, the flat portion 111 is more likely to interfere with and squeeze the transition portion 12a compared with the bent portion 112. Therefore, the elastic pad 16 provided between the flat portion 111 and the first side wall 121 can effectively reduce the risk of wear caused by mutual squeezing between the electrode assembly and the transition portion of the housing, relieve lithium precipitation, prolong the service life of the battery, and also reduce the number of elastic pads 16 used and reduce costs.

In some embodiments, the housing 12 is a rigid housing, and the elastic pad 16 partially covers or completely covers a surface of the electrode assembly 11 facing the first side wall 121. The rigid housing may be, for example, a steel, aluminum, plastic (such as polypropylene), composite metal (such as copper-aluminum composite) shell, or the like.

The elastic pad 16 partially covering the surface of the electrode assembly 11 facing the first side wall 121 may be that the elastic pad 16 is located at any position on the surface of the electrode assembly 11 facing the first side wall 121, for example, a central area or adjacent to a central area of the surface of the electrode assembly 11 facing the first side wall 121. The elastic pads 16 may be provided in one or more, for example, one elastic pad 16 covers the central area of the surface of the electrode assembly 11 facing the first side wall 121, or a plurality of elastic pads 16 are combined to cover the central area of the surface of the electrode assembly 11 facing the first side wall 121.

The elastic pad 16 completely covering the surface of the electrode assembly 11 facing the first side wall 121 may be that an edge of the elastic pad 16 is flush with an edge of the surface of the electrode assembly 11 facing the first side wall 121, or an edge of the elastic pad 16 exceeds an edge of the surface of the electrode assembly 11 facing the first side wall 121.

Since the housing 12 is a rigid housing, the elastic pad 16 located between the first side wall 121 and the electrode assembly 11 can implement avoidance of the transition portion 12a. The elastic pad 16 partially covering the surface of the electrode assembly 11 facing the first side wall 121 can save materials and reduce costs. The elastic pad 16 completely covering the surface of the electrode assembly 11 facing the first side wall 121 can absorb more uniformly the squeezing force during swelling of the electrode assembly.

In some embodiments, referring to FIG. 3 and FIG. 10, the housing 12 has an opening at an end, and the battery cell further includes an end cover 13 provided at the opening, where the end cover 13 is provided with electrode terminals 14; and the electrode assembly 11 includes tabs 115 connected to the electrode plates 113, where the tabs are connected to the electrode terminals 14.

The tabs 115 include a positive electrode tab 115a and a negative electrode tab 115b, and the electrode terminals 14 include a positive electrode terminal and a negative electrode terminal. The positive electrode terminal is connected to the positive electrode tab 115a, and the negative electrode terminal is connected to the negative electrode tab 115b. The end cover 13 may further be provided with a pressure relief valve 15.

In some embodiments, as shown in FIG. 6 to FIG. 9, the housing 12 is a flexible housing, and the elastic pad 16 completely covers the surface of the electrode assembly 11 facing the first side wall 121. The flexible housing may be a soft material capable of wrapping the electrode assembly 11, and the soft material may be, for example, an aluminum-plastic film.

The elastic pad 16 completely covering the surface of the electrode assembly 11 facing the first side wall 121 may be that an edge of the elastic pad 16 is flush with an edge of the surface of the electrode assembly 11 facing the first side wall 121, or an edge of the elastic pad 16 exceeds an edge of the surface of the electrode assembly 11 facing the first side wall 121.

Since the housing 12 is a flexible housing and the flexible housing wraps the electrode assembly 11 inside, two adjacent side walls of the flexible housing may be connected through the transition portion 12a. With the elastic pad 16 completely covering the surface of the electrode assembly 11 facing the first side wall 121, each transition portion 12a can be effectively avoided, reducing the risk of wear caused by mutual squeezing between the electrode assembly and the transition portion of the housing, relieving lithium precipitation, and prolonging the service life of the battery.

In some embodiments, referring to FIG. 6 and FIG. 9, the electrode assembly 11 includes tabs 115 connected to the electrode plates 113 (as shown in FIG. 9), and an end of the tab 115 extends outside the housing 12, so that the battery cell 10 is configured as a pouch battery. The tabs 115 include a positive electrode tab 115a and a negative electrode tab 115b.

The following describes a specific example of the embodiments of this disclosure. As shown in FIG. 5 to FIG. 8, the battery cell 10 is a pouch battery cell including an electrode assembly 11, a housing 12, and an elastic pad 16.

The electrode assembly 11 includes at least two layers of electrode plates, and the at least two layers of electrode plates are stacked. The electrode assembly 11 can be a cuboid-shaped wound stacked structure or laminated stacked structure.

The housing 12 has an accommodating space 12b formed inside, and the housing 12 may be an aluminum-plastic film to package the electrode assembly 11 in the accommodating space 12b. The housing 12 may be of a cuboid shape, including two opposite first side walls 121, two opposite second side walls 122, and two opposite third side walls (not shown in the figure), where the first side walls 121, second side walls 122, and third side walls are roughly perpendicular to each other and connected through respective transition portions 12a.

The electrode assembly 11 includes two opposite side surfaces in a layer thickness direction C, and the side surface may be a surface with the largest area among the side surfaces of the electrode assembly 11. The first side walls 121 respectively face the two side surfaces, and elastic pads 16 are respectively provided between each first side wall 121 and the side surface of the electrode assembly 11, where the elastic pad 16 completely covers the side surface. Completely covering the side surface means that an outer contour of the elastic pad 16 is not smaller than an outer contour of the side surface.

The transition portion 12a has a round corner, and a thickness T of the elastic pad 16 when uncompressed is greater than a radius R of the round corner. The elastic pad 16 may further have the following characteristics: resistance to electrolyte, insulation, and a compressibility of not less than 30% under a surface stress of 2 MPa. A compressibility rate refers to a ratio of a compression amount of the elastic pad 16 (a difference between the thickness T when uncompressed and a thickness T1 when compressed under a surface stress of 2 MPa) to the thickness T when uncompressed.

The elastic pad 16 located between the electrode assembly 11 and the first side wall can not only increase a distance between the electrode assembly 11 and the housing 12 and provide space required for swelling of the electrode assembly 11, thus avoiding the transition portion 12a, but also absorb the swelling of the electrode assembly, thereby reducing the risk of wear caused by mutual squeezing between the electrode assembly and the transition portion of the housing, relieving lithium precipitation, and prolonging the service life of the battery.

An embodiment of this disclosure further provides a battery 100, including a box and the battery cell 10 according to any one of the foregoing embodiments, where the battery cell 10 is accommodated in the box.

An embodiment of this disclosure further provides an electric apparatus, including the battery cell 10 or battery 100 according to any one of the foregoing embodiments that supplies electrical energy.

An embodiment of this disclosure further provides an energy storage apparatus, including the foregoing battery cell or battery, where the battery is capable of storing electrical energy and supplying electrical energy.

The above embodiments are merely intended for describing the technical solutions of this disclosure but not for limiting this disclosure. Although this disclosure is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this disclosure. They should all be covered in the scope of the claims and specification of this disclosure. In particular, as long as there is no structural conflict, the various technical features mentioned in the embodiments can be combined in any manner. This disclosure is not limited to the specific embodiments disclosed in this specification, but includes all technical solutions falling within the scope of the claims.

## Claims

1. A battery cell, comprising:
an electrode assembly, comprising at least two layers of electrode plates, wherein the at least two layers of electrode plates are stacked;
a housing, with an accommodating space formed inside, wherein the electrode assembly is located in the accommodating space, the housing comprises a first side wall and a second side wall, the first side wall is located on a side of the electrode assembly in a layer thickness direction, a plane on which the first side wall is located intersects with a plane on which the second side wall is located, and the first side wall is connected to the second side wall through a transition portion; and
an elastic pad, located between the electrode assembly and the first side wall.

2. The battery cell according to claim 1, wherein
the transition portion has a transition round corner, and a thickness of the elastic pad is greater than a radius of the transition round corner.

3. The battery cell according to claim 1 or 2, wherein
the housing comprises two first side walls opposite each other in the layer thickness direction, the two first side walls being respectively located on opposite sides of the electrode assembly in the layer thickness direction; and
the elastic pad is provided between each first side wall and the electrode assembly.

4. The battery cell according to any one of claims 1 to 3, wherein
the housing is a flexible housing, and the elastic pad completely covers a surface of the electrode assembly facing the first side wall.

5. The battery cell according to any one of claims 1 to 3, wherein
the housing is a rigid housing, and the elastic pad partially covers or completely covers a surface of the electrode assembly facing the first side wall.

6. The battery cell according to any one of claims 1 to 5, wherein
the plane on which the second side wall is located is perpendicular to the layer thickness direction; and
the electrode assembly is configured as a wound stacked structure, wherein the electrode assembly comprises a flat portion and a bent portion connected with each other, and the elastic pad is provided between the flat portion and the first side wall.

7. The battery cell according to any one of claims 1 to 5, wherein
the electrode assembly is configured as a laminated stacked structure.

8. The battery cell according to any one of claims 2 to 7, wherein
the elastic pad is configured as compressible in the layer thickness direction, and the elastic pad has a thickness of T when uncompressed and a thickness of T1 when compressed by a surface stress of 2 MPa, wherein T is greater than the radius of the transition round corner, and (T - T1)/T ≥ 30%.

9. The battery cell according to claim 4, wherein
the electrode assembly comprises tabs connected to the electrode plates, an end of the tab extending outside the housing.

10. The battery cell according to claim 5, wherein
an end of the housing is provided with an opening, and
the battery cell further comprises:
an end cover, provided at the opening, wherein the end cover is provided with electrode terminals; and
the electrode assembly comprises tabs connected to the electrode plates, wherein the tabs are connected to the electrode terminals.

11. A battery, comprising:
a box and the battery cell according to any one of claims 1 to 10, wherein the battery cell is accommodated in the box.

12. An electric apparatus, wherein the electric apparatus comprises the battery cell according to any one of claims 1 to 10 or the battery according to claim 11 and configured to supply electrical energy.

13. An energy storage apparatus, comprising the battery cell according to any one of claims 1 to 10 or the battery according to claim 11, wherein the battery is capable of storing electrical energy and supplying electrical energy.
